Europäisches Patentamt

European Patent Office

Office européen des brevets

(11) Veröffentlichungsnummer: **0 076 924**
**B1**

(12) **EUROPÄISCHE PATENTSCHRIFT**

(45) Veröffentlichungstag der Patentschrift:
09.03.88

(51) Int. Cl.⁴: **B 60 R 13/06**, B 60 J 1/08

(21) Anmeldenummer: **82108131.2**

(22) Anmeldetag: **03.09.82**

(54) Verfahren zur Herstellung eines Dichtungs- und Halteprofils und Vorrichtung zur Durchführung des Verfahrens.

(30) Priorität: **10.10.81 DE 3140366**

(43) Veröffentlichungstag der Anmeldung:
**20.04.83 Patentblatt 83/16**

(45) Bekanntmachung des Hinweises auf die Patenterteilung:
**09.03.88 Patentblatt 88/10**

(84) Benannte Vertragsstaaten:
**DE FR GB IT**

(56) Entgegenhaltungen:
**EP - A - 0 046 360**
**EP - A - 0 069 021**
**BE - A - 622 894**
**CH - A - 348 803**
**DE - C - 911 781**
**FR - A - 996 815**
**FR - A - 1 374 552**
**FR - A - 2 157 189**
**US - A - 4 139 234**

(73) Patentinhaber: **METZELER KAUTSCHUK GMBH,**
**Gneisenaustrasse 15, D-8000 München 50 (DE)**

(72) Erfinder: **Caspari, Horst, Poststrasse 50,**
**D-6800 Mannheim (DE)**
Erfinder: **Zinke, Karl, Stettiner Strasse 117,**
**D-6940 Weinheim (DE)**

(74) Vertreter: **Michelis, Theodor, Dipl.-Ing.,**
**Gneisenaustrasse 15, D-8000 München 50 (DE)**

## Beschreibung

Die Erfindung bezieht sich auf ein Verfahren zur Herstellung eines Einbauteils, bestehend aus einer Scheibe und einem Dichtungs- und Halterahmen für ein feststehendes Fenster, insbesondere für Kraftfahrzeuge, wobei der Rahmen aus einem Profil aus elastischem Material besteht und den Scheibenrand abdichtend umschliesst, sowie auf eine Vorrichtung zur Durchführung dieses Verfahrens.

Ein derartiges Verfahren ist aus der DE-C-911 781 bekannt. Dabei soll ein Rahmen aus Kautschuk auf den Rand einer Scheibe aufgebracht werden, indem zunächst der entsprechende Scheibenrand mit Aluminium oder einem anderen Metall metallisiert wird, um daraus nach Aufbringen des Kautschuks und dessen Ausvulkanisation praktisch eine Gummi-Metall-Verbindung zu schaffen. Der Kautschuk wird dabei als Wulst auf den Scheibenrand aufgelegt und dann durch Zusammenführen der Vulkanisationsform um den Scheibenrand herumgepresst.

Ein derartiges Verfahren ist jedoch sehr aufwendig, da hierzu der Scheibenrand selbst erst metallisiert werden muss, um damit das Anvulkanisieren des Kautschuks zu ermöglichen.

Demgegenüber liegt der Erfindung die Aufgabe zugrunde, ein Verfahren zur Herstellung eines derartigen Einbauteils zu schaffen, bei dem das Dichtungs- und Halteprofil in einem Arbeitsgang an die abzudichtende Scheibe gebracht werden kann und diese dauerhaft umschliesst.

Zur Lösung dieser Aufgabe ist ausgehend von dem eingangs genannten Stand der Technik erfindungsgemäss vorgesehen, dass die Scheibe selbst als Kernplatte in die Form einer Spritzgiessmaschine für das Profil eingelegt und das Profil unmittelbar in einem Arbeitsgang an den Scheibenrand haftend angespritzt wird.

Damit ergibt sich eine erhebliche Vereinfachung des Herstellungsverfahrens, wobei insbesondere auch keine Probleme mit der Passgenauigkeit des Dichtungsprofils auftreten, da dieses direkt in der Form an die Scheibe angespritzt wird.

Wenn zur Herabsetzung des Luftwiderstandes von Kraftfahrzeugen die Scheibe relativ weit ausserhalb der Profilkörperneutralen zu liegen kommt, so kann es erforderlich sein, dass das Profil eine zusätzliche Armierung aufweist, da das Profil sonst von der Scheibe springt und nicht im Rahmen hält. Hierzu ist in Weiterbildung der Erfindung vorgesehen, dass das Profil unmittelbar in einem Arbeitsgang die Armierung umhüllend an den Scheibenrand haftend angespritzt wird.

Es ist dabei aber auch möglich, dass in einem zweistufigen Arbeitsgang zunächst die Armierung und anschliessend das den Rahmen bildende Profil an den Scheibenrand haftend angespritzt wird.

Zweckmässigerweise wird der vom Profil abgedeckte Bereich des Scheibenrandes vorbehandelt und mit einem Haftvermittler versehen.

Bei einer Vorrichtung zur Durchführung des Verfahrens ist erfindungsgemäss eine zweiteilige Form mit einem umlaufenden, in der Trennebene geteilten Formenkanal für den Rahmen bildende Profil vorgesehen sowie die in die Trennebene der Form als Kernplatte eingelegte Scheibe, die mit ihrem Rand in den Formenkanal ragt.

Die Scheibe kann dabei im an den Formenkanal angrenzenden Bereich durch zwei umlaufende elastische Leisten abdichtend fixiert werden, so dass eine sichere Abdichtung der Scheibenoberfläche gegen die allein am Rand einzuspritzende Profilmasse gegeben ist.

Als vorteilhafte Vorrichtung kann dabei eine Zwei-Komponenten-Spritzgiessmaschine dienen mit der als Kernplatte eingelegten Scheibe sowie einem ersten Formwerkzeug zum Anspritzen der Armierung an den Scheibenrand und einem zweiten Formwerkzeug zum Anspritzen des Profils an den mit der Armierung versehenen Scheibenrand.

Anhand einer schematischen Zeichnung sind Aufbau und Wirkungsweise von Ausführungsbeispielen nach der Erfindung näher erläutert. Dabei zeigen:

Fig. 1 die Seitenansicht einer Kraftfahrzeugtür mit der von einem Profil zu umgebenden Scheibe,

Fig. 2 die Scheibe mit umlaufenden Dichtungsprofil in vergrössertem Massstab,

Fig. 3 einen Querschnitt durch den unteren Scheibenrand mit dem angrenzenden Profil und einer innerhalb des Profils eingebetteten Armierung entsprechend der Schnittlinie III–III nach Fig. 2,

Fig. 4 einen Querschnitt durch ein entsprechendes Profil mit einer an die Scheibe angeklebten Armierung,

Fig. 5 ein Querschnitt durch ein Profil mit einer an die Scheibe direkt angespritzten Armierung,

Fig. 6 eine Aufsicht auf das Formunterteil mit dem Formkanal und der als Kernplatte eingelegten Scheibe,

Fig. 7 einen Querschnitt durch eine geschlossene Form in Arbeitsstellung entsprechend der Schnittlinie VII–VII nach Fig. 6 und

Fig. 8a und 8b das Prinzip eines Zwei-Komponenten-Kunststoffspritzautomaten in Seitenansicht und Aufsicht zur Herstellung eines derartigen Profils mit Armierung in einem Arbeitsgang.

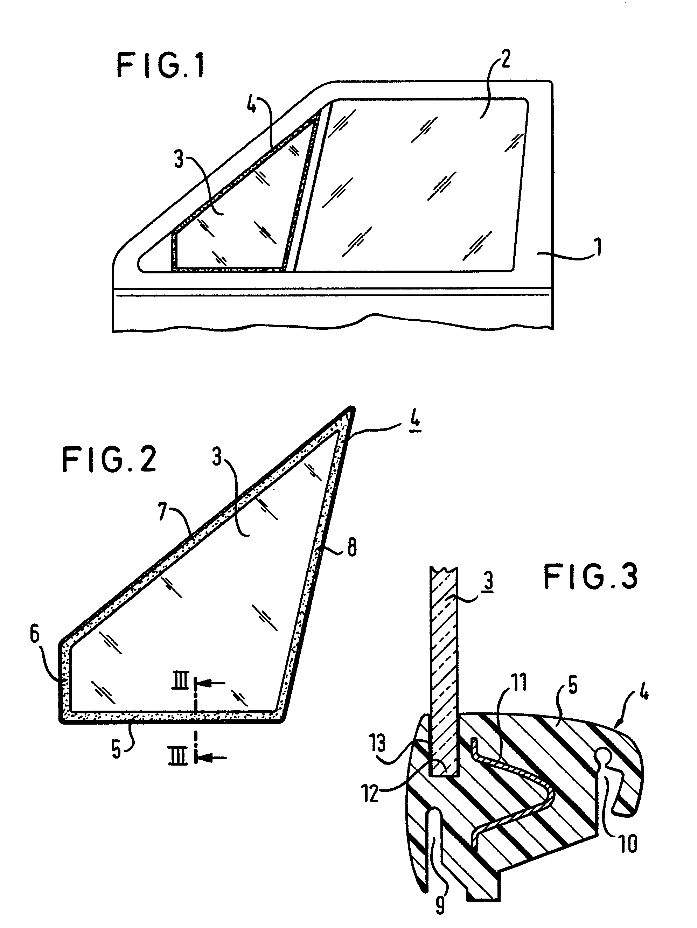

Wie aus Fig. 1 zu ersehen ist, weist die nur im Oberteil dargestellte Kraftfahrzeugtür 1 im allgemeinen eine versenkbare Scheibe 2 und ein feststehendes Dreiecksfenster 3 im vorderen Bereich auf. Da die Scheibe 3 dieses Fensters feststeht, muss sie auf allen Seiten von einem Dichtungsprofil 4 umgeben sein, mit dem sie abdichtend in die Tür 1 eingesetzt ist.

In Fig. 2 ist dieses feststehende Fenster 3 im vergrösserten Massstab mit dem umlaufenden Profil 4 gezeigt. Dabei kann dieses Profil 4 – wie noch später erläutert werden wird – auf jeder Seite der Scheibe 3 einen unterschiedlichen Querschnitt 5, 6, 7, 8 entsprechend den jeweiligen Anforderungen und der Ausbildung der Halterung im Fensterrahmen aufweisen.

In Fig. 3 ist nunmehr im vergrösserten Massstab ein Schnitt durch diesen unteren Profilabschnitt 5 mit einem Teil der Scheibe 3 dargestellt. Wie aus der Figur ersichtlich, weist dieser Profilabschnitt 5 einen unregelmässigen Querschnitt mit zwei Einschnitten 9 und 10 zur Aufnahme entsprechender nicht näher dargestellter Halteflansche der metallischen Tür auf. Innerhalb des Profilkörpers 5 ist eine Armierung 11 angeordnet, die umlaufend parallel zum Scheibenrand 12 verläuft. Bei dem dargestellten Ausführungsbeispiel ist diese Armierung 11, die aus einem festen Werkstoff, wie beispielsweise Polyamid, bestehen kann, auf allen Seiten vom Profilmaterial 5 umschlossen, d.h. sie steht nicht in direkter Berührung mit der Scheibe 3 selbst.

Wie noch später im einzelnen beschrieben wird, wird nunmehr dieses Profil 4 direkt an den Scheibenrand 3 angespritzt, wobei die den Scheibenrand überdeckenden Bereiche entsprechend vorbehandelt und mit einem Haftvermittler 13 versehen sein können. Sowohl Scheibe 3 als auch Armierung 11 werden dabei vorher in die Form eingelegt, so dass beide Teile in einem Arbeitsgang vom Profilmaterial umspritzt werden können.

Wie aus dem dargestellten Ausführungsbeispiel ersichtlich, liegt hier die Scheibe 3 relativ weit ausserhalb der Profilkörperneutralen, d.h. der Profilabschnitt 5 – wie alle anderen Profilabschnitte 6, 7 und 8 auch – ragt nur sehr wenig nach aussen über die Scheibe 3 hinaus, so dass Windgeräusche und Strömungsverluste gegenüber der herkömmlichen, weiter innen liegenden Anordnung der Scheiben stark reduziert werden.

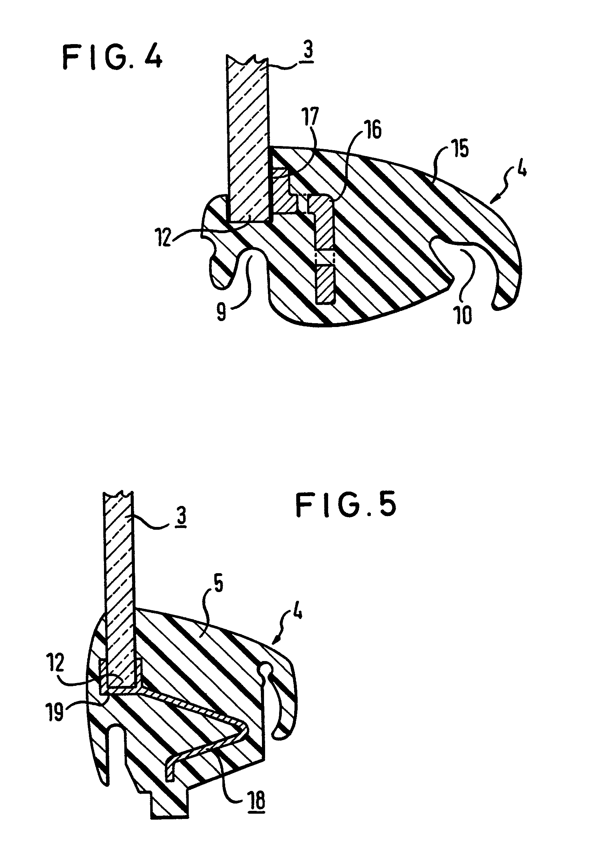

In Fig. 4 ist eine weitere Variante des unteren Profilabschnittes 5 nach Fig. 2, das hier mit der Bezugsziffer 15 versehen ist, dargestellt. Nach diesem Ausführungsbeispiel ist die Armierung 16 mit einer Seite 17 direkt mit der Scheibe 3 verklebt. Diese Armierung 16 kann sich ebenfalls um den gesamten Rand 12 der Scheibe 3 erstrecken. Auch hierbei wird dann der Profilkörper 4 in einem Arbeitsgang an den Rand 12 der Scheibe 3 angespritzt, wobei die Armierung 16 auf allen Seiten vom Profilmaterial umschlossen ist.

Eine weitere Variante ist in Fig. 5 dargestellt. Hierbei ist eine Armierung 18 vorgesehen, die mit einem U-förmigen Ansatz 19 den Rand 12 der Scheibe 3 allseitig umfasst. Diese Armierung 18 kann dabei an den Scheibenrand 12 angeklebt oder eingeclipst oder aber – was besonders zweckmässig ist – in einem ersten Arbeitsgang unmittelbar an den Scheibenrand 12 angespritzt werden. In einem zweiten Arbeitsgang wird dann der Profilkörper 4 um diese Armierung 18 herum an die Scheibe 3 direkt angespritzt. Durch diese Verfahrensweise ist also eine einfache und schnelle Herstellung des Profils mit integrierter Armierung möglich.

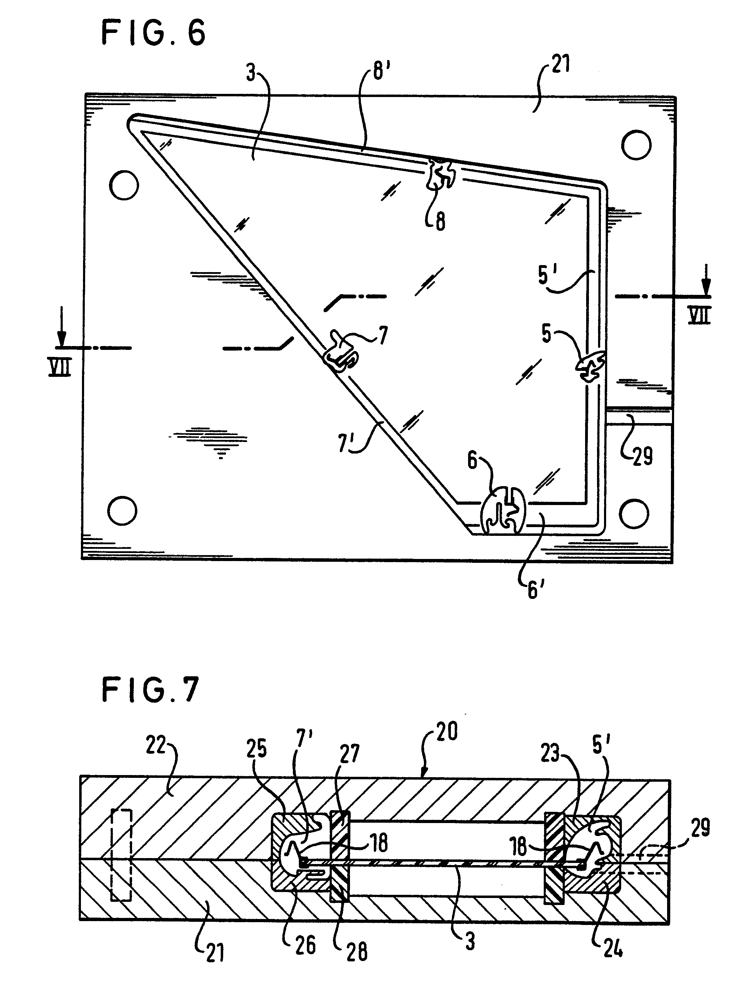

In Fig. 6 und 7 ist in Aufsicht und Querschnitt eine erfindungsgemässe Form zur Herstellung dieser mit dem Profil 4 direkt umspritzten Scheibe 3 dargestellt. Die Form 20 besteht dabei aus einem Formunterteil 21 – dessen Aufsicht in Fig. 6 gezeigt ist – und dem Formoberteil 22, in denen mit entsprechenden geteilten Einsätzen 23 und 24 bzw. 25 und 26 die Formkanäle 5', 6', 7' und 8' gebildet sind. Die Trennebene der Form 20 ist erfindungsgemäss als Kernplatte die Scheibe 3 selbst eingelegt, die an ihren vier Rändern entsprechend der späteren Überdeckung durch die einzelnen Profilabschnitte in die Formhohlräume 5' bis 8' hineinragt. An die Scheibe 3 ist dabei bereits die Armierung 18 – z.B. entsprechend Fig. 5 – befestigt, die anschliessend von den entsprechenden Profilabschnitten fest umschlossen ist. Insbesondere aus Fig. 6 ist diese Überdeckung der Scheibe 3 deutlich zu ersehen, da hierbei die zu erhaltenden Profilabschnitte 5, 6, 7 und 8 in die Zeichenebene gedreht in ihrer endgültigen Lage zur Scheibe eingezeichnet sind. Selbstverständlich ist es aber auch möglich, dass die Querschnitte der einzelnen Profilabschnitte auf allen vier Seiten der Scheibe gleich sind.

Um eine sichere Abdichtung des freizuhaltenden Scheibenbereiches vom Profilmaterial zu gewährleisten, ist die Scheibe 3 im an die Formkanäle 5' bis 8' angrenzenden Bereich durch zwei umlaufende elastische Leisten 27 und 28 abdichtend fixiert.

Nach genau masshaltigem Einlegen der Scheibe 3 mit der bereits angeformten Armierung 18 – z.B. mittels Saugnäpfen und einer speziellen Leere – und Aufsetzen des Formoberteils 22 auf das Formunterteil 21 wird die Profilmasse über den Zuführkanal 29 in die Form eingespritzt, wo sich bei entsprechender Konsistenz und entsprechendem Druck gleichmässig über den gesamten Formkanal auf alle vier Ränder der Scheibe 3 verteilt. Nach Aushärtung bzw. anschliessendem Ausvulkanisieren kann dann nach Abnehmen des Oberteils 22 die Scheibe 3 komplett mit dem direkt angespritzten fertigen Profil 4 entnommen werden.

Wenn dabei die Armierung 18 an die Scheibe 3 direkt angespritzt werden soll, ist es möglich, dies in einem ersten getrennten Arbeitsgang in einer gleichgestalteten Form 20 durchzuführen, wobei dann natürlich die Formhohlräume einen entsprechenden anderen Querschnitt aufweisen müssen.

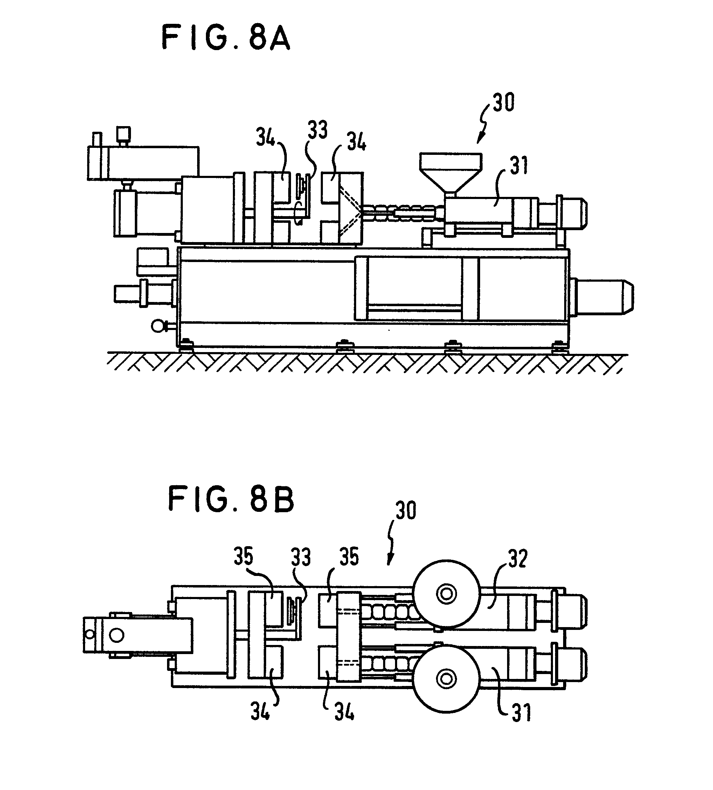

Eine weitere, noch optimalere Herstellung der Scheibe mit dem direkt angespritzten Profil und der Armierung ist in Fig. 8 gezeigt, wonach ein Zwei-Komponenten-Kunststoffspritzautomat 30 verwendet wird, der zwei Spritzeinheiten 31 und 32 aufweist. Die Spritzeinheit 31 sei dabei z.B. mit Polyamid zur Herstellung der Armierung und die Spritzeinheit 32 mit PVC für das zu umspritzende Profil beschickt. Hierbei wird die an einem Schwenkarm 33 befestigte Kernplatte 3 in Form der zu umspritzenden Scheibe 3 zunächst im Formwerkzeug 34 – das der besseren Übersicht halber im auseinandergefahrenen Zustand dargestellt ist – mit der Armierung 18 umspritzt und anschliessend in das Formwerkzeug 35 geschwenkt, in dem dann in einem zweiten Arbeitsgang die Umspritzung mit dem eigentlichen Profilkörper 4 erfolgt. Auf diese Weise ist also eine sehr schnelle und massgenaue Herstellung sowohl der Armierung als auch des Profilkörpers möglich, so dass dann die Scheibe zusammen mit dem angespritzten Profil als einbaufertige Baueinheit vorliegt.

Als Material für das Profil 4 kann dabei bei allen Herstellungsarten ein elastischer Kunststoff, beispielsweise in Form von PVC oder aber auch Kautschuk verwendet werden, wobei das Profil dann entweder in der Form selbst oder in einem gesonderten Arbeitsgang noch auszuvulkanisieren ist.

**Patentansprüche**

1. Verfahren zur Herstellung eines Einbauteils, bestehend aus einer Scheibe (3) und einem Dichtungs- und Halterahmen (4) für ein feststehendes Fenster, insbesondere für Kraftfahrzeuge, wobei der Rahmen (4) aus einem Profil aus elastischem Material besteht und den Scheibenrand (12) abdichtend umschliesst, dadurch gekennzeichnet, dass die Scheibe (3) selbst als Kernplatte in die Form (20) einer Spritzgiessmaschine (30) für das Profil (4) eingelegt und das Profil (4) unmittelbar in einem Arbeitsgang an den Scheibenrand (12) haftend angespritzt wird.

2. Verfahren nach Anspruch 1 mit einer benachbart zum Scheibenrand (12) angeordneten Armierung (16, 18), dadurch gekennzeichnet, dass das Profil (4) unmittelbar in einem Arbeitsgang die Armierung (16, 18) umhüllend an den Scheibenrand (12) haftend angespritzt wird.

3. Verfahren nach Anspruch 1 mit einer benachbart zum Scheibenrand angeordneten Armierung (16, 18), dadurch gekennzeichnet, dass in einem zweistufigen Arbeitsgang zunächst die Armierung (16, 18) und anschliessend das den Rahmen (4) bildende Profil an den Scheibenrand (12) haftend angespritzt wird.

4. Verfahren nach Anspruch 1, dadurch gekennzeichnet, dass der vom Profil (4) abgedeckte Bereich des Scheibenrandes (12) vorbehandelt und mit einem Haftmittler (13, 17) versehen wird.

5. Vorrichtung zur Durchführung des Verfahrens nach Anspruch 1, gekennzeichnet durch eine zweiteilige Form (20) mit einem umlaufenden, in der Trennebene geteilten Formenkanal (5', 6', 7', 8') für den Rahmen bildende Profil (4), sowie die in die Trennebene der Form (20) als Kernplatte eingelegte Scheibe (3), die mit ihrem Rand in den Formenkanal (5', 6', 7', 8') ragt.

6. Vorrichtung nach Anspruch 5, dadurch gekennzeichnet, dass die Scheibe (3) im an den Formenkanal (5', 6', 7', 8') angrenzenden Bereich durch zwei umlaufende elastische Leisten (27, 28) abdichtend fixiert ist.

7. Vorrichtung zur Durchführung des Verfahrens nach Anspruch 3, gekennzeichnet durch eine Zwei-Komponenten-Spritzgiessmaschine (30), mit der als Kernplatte eingelegten Scheibe (3) sowie einem ersten Formwerkzeug (34) zum Anspritzen der Armierung (18) an den Scheibenrand und einem zweiten Formwerkzeug (35) zum Anspritzen des Profils (4) an den mit der Armierung (18) versehenen Scheibenrand.

**Claims**

1. Process for the manufacture of a construction part consisting of a pane (3) and a sealing and support frame (4) for a fixed window, in particular for motor vehicles, wherein the frame (4) consists of a section of elastic material and surrounds and seals off the rim (12) of the pane, characterised in that the pane (3) itself is placed as a core plate in the mould (20) of an injection moulding machine (4) for the section (4) and the section (4) is directly injected in one working stage to adhere to the rim (12) of the pane.

2. Process according to claim 1 with an armouring (16, 18) arranged adjacent to the rim (12) of the pane, characterised in that the section (4) is directly injected in one working stage and enveloping the armouring (16, 18), to adhere to the rim (12) of the pane.

3. Process according to claim 1 with an armouring (16, 18) arranged adjacent to the rim (12) of the pane, characterised in that in a two-stage working operation first the armouring (16, 18) and finally the section (4) forming the frame (4) is injected adhering to the rim (12) of the pane.

4. Process according to claim 1, characterised in that the region of the rim (12) of the pane covered by the section (4) is previously treated and provided with a bonding agent (13, 17).

5. Device for carrying out the process according to claim 1, characterised by a two-piece mould (20) with an encircling mould channel (5', 6', 7', 8') parted in the plane of separation for the section forming the channel (4), and the pane (3) placed as a core plate in the plane of separation of the frame, the rim of which pane projects into the mould channel (5', 6', 7', 8').

6. Device according to claim 5, characterised in that the pane (3) is fixed and sealed off in the region bordering the mould channel (5', 6', 7', 8') by two encircling elastic rails (27, 28).

7. Device for carrying out the process according to claim 3, characterised by a two-piece injection moulding machine (30), with the pane (3) placed inside as a core plate and a first form tool (34) for injecting the armouring (18) to the rim of the pane and a second form tool (35) for injecting the section (4) to the rim of the pane provided with the armouring.

**Revendications**

1. Procédé de fabrication d'une pièce de montage, constituée d'une vitre (3) et d'un cadre (4) d'étanchéité et de maintien pour une fenêtre fixe, notamment de véhicule automobile, le cadre (4) étant constitué d'un profilé en une matière élastique et entourant de manière étanche le bord (12) de la vitre, caractérisé en ce qu'il consiste à introduire la vitre (3) elle-même, comme plaque formant noyau, dans le moule (20) d'une machine de moulage par injection (30) du profilé (4) et à appliquer, de manière adhérente et par moulage par injection, le profilé (4) directement en une opération sur le bord (12) de la vitre.

2. Procédé suivant la revendication 1, avec une armure (16, 18) disposée à proximité du bord (12) de la vitre, caractérisé en ce qu'il consiste à appliquer, de manière adhérente et par moulage par injection, le profilé (4) directement en une opération sur le bord (12) de la vitre en enrobant l'armure (16, 18).

3. Procédé suivant la revendication 1, ayant une armure (16, 18) disposé à proximité du bord de la vitre, caractérisé en ce qu'il consiste à appliquer d'abord, de manière adhérente et par moulage par injection, dans une opération en deux stades, d'abord l'armure (16, 18), et ensuite le profilé formant le cadre (4) sur le bord (12) de la vitre.

4. Procédé suivant la revendication 1, caractérisé en ce qu'il consiste à prétraiter la région du bord (12) de la vitre recouverte par le profilé, et à la munir d'un agent adhésif (13, 17).

5. Dispositif pour la mise en œuvre du procédé suivant la revendication 1, caractérisé par un moule (20) en deux parties, ayant un canal de conformation (5', 6', 7', 8') qui fait tout le tour, qui est subdivisé dans le plan de joint et qui est destiné au profilé (4) formant le cadre, ainsi que par la vitre (3) qui est placée dans le plan de joint du moule (20) en tant que plaque formant noyau et qui fait saillie dans le canal de conformation (5', 6', 7', 8') par son bord.

6. Dispositif suivant la revendication 5, caractérisé en ce que la vitre (3) est fixée de manière étanche dans la région proche du canal de conformation (5', 6', 7', 8'), par deux barrettes (27, 28) élastiques faisant tout le tour.

7. Dispositif pour la mise en œuvre du procédé suivant la revendication 3, caractérisé par une machine de moulage par injection (30), à deux composants, ayant la vitre (3) en tant que plaque formant noyau, ainsi qu'un premier outil de moulage (34) pour appliquer l'armure (18) par moulage par injection sur le bord de la vitre, et un second outil de moulage (35) pour appliquer par moulage par injection le profilé (4) sur le bord de la vitre muni de l'armure (18).

FIG.1

FIG.2

FIG.3

FIG. 4

17 16 15 4

3

12

9 10

FIG. 5

3

5 4

12

19

18

# FIG. 6

# FIG.7

# FIG. 8A

# FIG. 8B